Europäisches Patentamt

(19) European Patent Office

Office européen des brevets

(11) Publication number : **0 391 967 B1**

# EUROPEAN PATENT SPECIFICATION

(12)

(45) Date of publication of patent specification :
**12.08.92 Bulletin 92/33**

(51) Int. Cl.⁵ : **A61C 19/00**

(21) Application number : **89901100.1**

(22) Date of filing : **21.12.88**

(86) International application number :
**PCT/DK88/00215**

(87) International publication number :
**WO 89/05613 29.06.89 Gazette 89/14**

(54) **A MICROPROCESSOR-CONTROLLED DENTAL APPARATUS.**

(30) Priority : **22.12.87 DK 6801/87**
**17.05.88 DK 2702/88**

(43) Date of publication of application :
**17.10.90 Bulletin 90/42**

(45) Publication of the grant of the patent :
**12.08.92 Bulletin 92/33**

(84) Designated Contracting States :
**AT BE CH DE FR GB IT LI LU NL SE**

(56) References cited :
**EP-A- 42 267**
**EP-A- 42 268**
**EP-A- 42 269**

(73) Proprietor : **DEN-FLEX A/S**
**4, Lyngager**
**DK-2605 Brondby (DK)**

(72) Inventor : **SORENSEN, Kim**
**Christianholms Parkvej 20**
**DK-2930 Klampenborg (DK)**
Inventor : **SKOVSGAARD, Herluf, Vejby**
**Traneparken 64 Assentoft**
**DK-8900 Randers (DK)**

(74) Representative : **Raffnsoee, Knud Rosenstand et al**
**Internationalt Patent-Bureau Hoeje Taastrup Boulevard 23**
**DK-2630 Taastrup (DK)**

EP 0 391 967 B1

# Description

The invention relates to a dental apparatus comprising an instrument arrangement having a number of carriers for dynamic dental instruments, energizing units associated therewith, a detector device for providing an instrument selection signal in response to the removal of an instrument from its carrier, an instrument operator device including a foot contact with a movable control member for operating a selected instrument and for the control of auxiliary functions associated with the operation thereof, and a microprocessor for monitoring and controlling the operational functions of the instruments and their auxiliary functions and activating said instrument operator device in response to said instrument selection signal.

EP-patents Nos 42,268 and 42,269 disclose such dental apparatuses providing for obtaining a very extensive simplification and automatization of the dentist's performance of a number of different operational functions during a dental treatment, a single foot contact being used for the general operation of an instrument taken from the instrument carrier and for effecting various auxiliary functions in this respect, such as activating the air blow and spray pre-selection of the coolant applied when using a motor or turbine driven instrument, the control member of said foot contact being moved in various directions and, on the other hand, actuated either to a very short duration of the movement or to a longer duration of the movement.

In connection with a particular mode switch-over the foot contact may further, provided all instruments occupy their home positions in the instrument carrier, be used for activating a number of auxiliary functions not associated with the operation of the instruments, e.g. adjustment of the patient's chair, activating the fountain flush, filling water in the rinsing glass and call the dentist's assistant.

Starting from said prior dental apparatus it is an object of the invention to further develop the efforts with respect to simplification and automatization so that the foot contact may be used to control so to say any imaginably occurring operations and auxiliary functions and to provide at the same time a monitoring and control system allowing the dentist at any time to get access to information about the actual status of the dental apparatus with a view to operational parameters of instruments etc., and further offering a considerable increase of optional possibilities of individual adjustment of operational parameters and auxiliary functions according to the dentist's desire.

It is a further object of the invention to provide a dental apparatus which in comparison with prior apparatus designs offers a considerably enhanced information level and a correspondingly improved operational security.

This is achieved according to the invention in that a monitoring and control display is connected with the microprocessor and includes a number of function display fields for visually displaying operational functions of the instruments and said auxiliary functions, and selection switches associated with the function display fields for the selection of functions displayed in the fields, whereby the total number of selectable functions, is organized in function sets which are to be displayed in the fields and each comprise a number of functions, dependent on the number of display fields, means being provided to operate the microprocessor to switch said display from one function set to another.

The dental apparatus according to the invention is primarily based on the idea of allowing a very considerable number of operational and auxiliary functions to be effected by means of a limited number of operational switches, modern information technology being applied to change the functional definition of said switches.

In a very simple embodiment in which the foot contact is solely to be used to operate the instruments and to activate auxiliary functions directly associated therewith, there may thus, for each selected instrument, be provided one ore more sets of functions or partial functions corresponding to the number of function-display fields. For example, in case of a rotating instrument such sets of functions may comprise a function set offering selection of different velocities, a function set offering choice between various coolant compositions and a special auxiliary set of functions, during the individual functions of which an auxiliary function may be activated by a movement of the control member on the foot contact that is different from the operating movement of the instrument.

According to a second embodiment the monitoring and control display includes at least one separate information displaying field for the display of information concerning the functions displayed in the function display fields. For example, in connection with the selection of an instrument such information may include display of the latest adjusted operational parameters of the actual instrument.

In connection with such an information displaying field on the monitoring and control display an alfa-numeric keyboard may be connected to the microprocessor, thereby adapting at least one information displaying field to display information keyed by means of the keyboard. Such information generated by the keyboard may for instance include identifying information concerning the actual patient.

The monitoring and control display may in that respect particularly be constituted by an image screen with associated control devices and be adapted to display text and video information, said screen including the function display fields in a predetermined area. This provides for using the same screen for instance to display data base information concerning the dental status of the patient and to display X-ray pictures and instruction programs reproduced from video tapes.

In a further preferred embodiment a mode switch which, in dependence on information from the instrument selector device, is controlled by the microprocessor known per se from the above mentioned EP-references, is adapted in a first mode of operation, in which all instruments occupy their home positions in the instrument carrier, to switch on the foot contact to activate auxiliary functions not associated with the instrument operation. According to the invention the microprocessor may in this embodiment in a first mode of operation be adapted to display auxiliary functions not associated with the instrument operation in the function display fields of the monitoring and control display and, in a second mode of operation, in which an instrument is selected for use, be adapted to display operational parameters of said instrument and, when selecting one of said functions by means of the function selection switches, to switch on the foot contact to actuate an activation device for the actual auxiliary function.

According to a further aspect of the invention it is preferred that the function display fields and the selection switches selectively associated with the fields are organized in a matrix arrangement, that the instrument operating functions and programming functions are organized in a hierarchically structured menu system which, for each set of operating functions displayed on the display, comprises an instrument menu located at a first level and which is displayed on the monitoring and control display when selecting the actual instrument, thereby displaying in the function display fields of the display actually adjusted operational parameters of the operation of said instrument and/or of auxiliary functions associated with the instrument, and at least one adjustment menu associated with the instrument menu and located at a subordinate level, and on the display of the instrument menu as well as the adjustment menu on the display in one of its fields a level shift function is displayed, for switching over the display to show an adjustment menu and switching it back to display the instrument menu, respectively, by operating the selection switch communicating with the field.

With respect to multi-user systems, this provides for achieving an advantageous increase of the number of selectable operating functions for the individual instruments, opening up the possibility of a fully implemented user-individual programming of said functions, thereby making it possible inter alia to adjust operational parameters and associated auxiliary functions, also when the instrument has been removed from its carrier.

By actuating the foot contact for the operation of an instrument one or more sets of functions may be provided for a selected instrument, each set offering a number of functions corresponding to the number of function display fields, for instance for a rotating instrument one set of functions allowing choice between different velocity functions and one set of functions allowing choice between different coolant compositions.

In connection with a mode switch-over, by which the foot contact may be used, when all instruments are in their home positions, to activate auxiliary functions not associated with the instrument operation, such auxiliary junctions may as well be displayed in the fields of the monitoring and control display and selected by means of associated selection switches. The auxiliary junctions may comprise one or more programming function(s) by means of which a possible user-individual programming may be effected to adjust operational parameters and/or auxiliary functions.

In a simple design such a dental apparatus according to the invention may include a number of instrument menus for individual dynamic instruments and one or more adjustment menu(s) for each instrument menu.

A considerably more flexible utilization of the range of instruments used for the dental apparatus is, moreover, obtained according to a preferred embodiment in that the instrument carriers are associated with instrument suspension devices for optional coupling of various dynamic instruments, that each suspension device includes an instrument sensor member for sensing the type of the actually connected instrument, and in that an energizing source common to the instrument carriers is connected to a control circuit controlled by the microprocessor for adjusting said energizing source to an energy generating function adapted to the selected instrument.

With a design of the dental apparatus with a mode switch of the above type the hierarchically organized menu system may include a main menu at a superior level, on the display of which on the display, identification information about a number of auxiliary functions not associated with the instrument operation is shown in a number of its fields, and on the display of each instrument menu on the display, a level shift function for switch-back to the overlying level is shown in one of the display fields.

With an instrument removed from its carrier, it will thus be possible to switch back to the main menu and activate one the auxiliary functions related thereto, also when using the instrument.

The invention will now be explained in further detail with reference to the schematical drawings, in which

Fig. 1 in a block diagram illustrates the parts of a preferred embodiment of the dental apparatus according to the invention, necessary to understand the invention,

Fig 2 is a first embodiment of a monitoring and control panel,

Fig. 3 is a synoptic illustration of a hierarchically organized system of menus for operation and auxiliary functions of the dental apparatus, and

Figs 4 to 6 are examples of a main menu, an instrument menu and an adjustment menu, respectively, in the menu system.

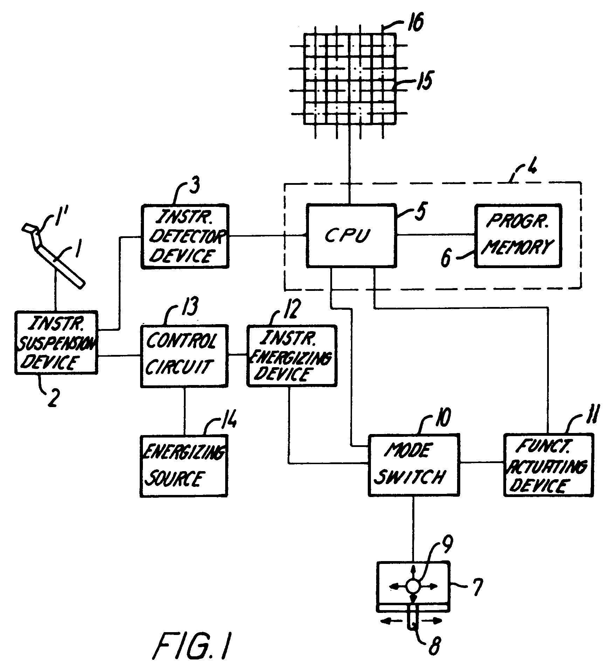

In Fig. 1 numeral 1 designates a dynamic dental instrument accommodating as energizing unit a microprocessor mounted in the handle of the instrument. Different coupling members 1' may be connected to the instrument to receive drills, polishing pads etc. by means of a snap coupling, said coupling members usually including transmission devices of varying gearing ratios.

Each dynamic instrument 1 is accommodated in and communicates with an instrument suspension device 2 which according to a particular feature of the invention may be designed for optional coupling of different instruments and may in this respect include a sensor member for sensing the type of the actually connected instrument. In this context typical instruments include an electric micromotor, a turbine driven by pressurized air, an electric composite hardening lamp and an ultrasound dental cleaning device.

The instrument suspension device 2 is connected through an instrument detecting device 3 to a microprocessor 4 containing a CPU unit 5 and a program memory 6, by which the operation functions of the instruments of the dental apparatus as well as a series of auxiliary functions are monitored and controlled.

When instrument 1 is selected for use by taking it out of its home position on the instrument table, a signal is emitted from the detecting device 3 to the microprocessor 4, following which the activation and controlling of the operation of the instrument is effected by a foot contact 7 having a control member 8 movable in both lateral directions from a neutral central position. In the illustrated embodiment the foot contact 7 includes a further switch member 9, for instance designed as a so-called "joy stick" with four switching positions and the function of which will be explained in the following.

By means of a mode switch 10 controlled by the microprocessor 4 in dependence on the signals from the detector device 3 the foot contact may be used, in a first mode of operation, in which all instruments occupy their respective home positions, to activate and perform a number of auxiliary functions not associated with the instrument operation, the foot contact 7 being coupled via the mode switch 10 to a function activating device 11 activating said auxiliary functions either by various movements of the control member 8 on the foot contact 7 or by means of the monitoring and control display to be explained in the following.

In a second mode of operation in which an instrument 1 is selected for use, the foot contact 7 is connected to an instrument energizing device 12 and thereby to a control circuit 13 monitored by the microprocessor 4, said circuit taking care, inter alia by selection of a suitable energizing source 14, to adapt the supplied electric energy to the actual dynamic dental instrument.

The above mentioned parts of the dental apparatus operate mainly in the same manner as explained in EP patents Nos 42,268 and 42,269. In addition to the virtual operation of the instruments, foot contact 7 may also be used to activate a number of auxiliary functions not associated with the operation of the instruments.

As mentioned in the latter EP patent, the foot contact 7 may be utilized, during the operation of the instrument, to activate auxiliary functions associated directly with the operation of a selected instrument, such as varying the air-water composition of a coolant applied during use of the instrument, by actuating the control member 8 to a movement different from the instrument operation movement, with respect to direction or duration.

A monitoring and control display 15 is connected to the microprocessor 4.

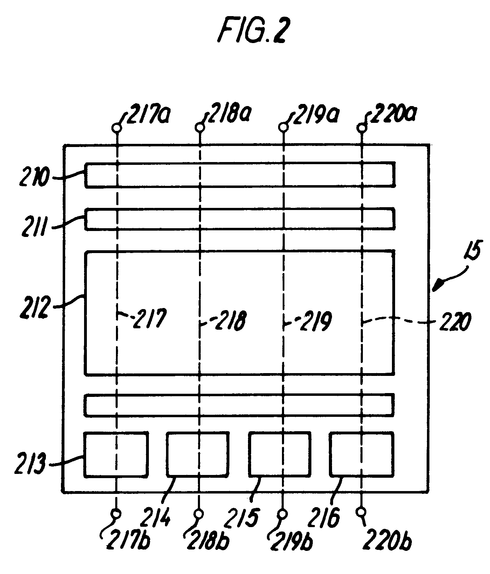

A first embodiment such a monitoring and control display is schematically illustrated in Fig. 2.

In this example the monitoring and control display 15 includes, on one hand, three information displaying fields 210, 211 and 212 and, on the other hand, four function display fields 213, 214, 215 and 216 for visually displaying instrument operation functions and auxiliary functions, sub-functions thereof or functional sequences. A selection switch for the selection of the function displayed in the field is associated with each of the function display fields 213, 214, 215 and 216. In the illustrated example said selection switches are implemented by means of IR- or UV-rays 217, 218, 219 and 220 each passing a respective one of the function display fields from a radiation source 217a to 220a to a radiation detector 217b to 220b. The illustrated positioning of the function display fields 213 to 216 in alignment on a single row on the display, thus allows the selection switches 217 to 220 to be selectively activated by placing a finger in an activation zone opposite the actual function display field.

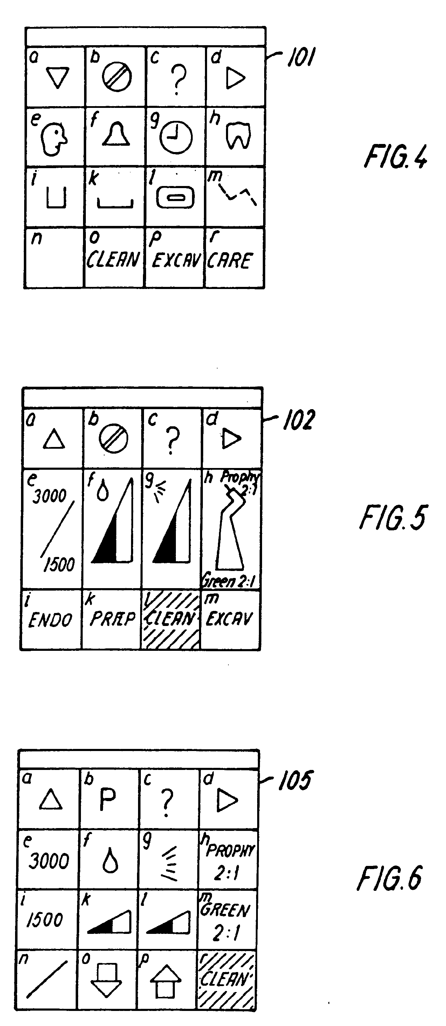

However, the invention is not restricted to the implementation of the monitoring and control display 15 illustrated in Fig. 2. The information display fields 210, 211 and 212 may for instance be left out and the display 15 may as illustrated in Figs 4 to 6 include a larger number of function display fields in a matrix-arrangement of rows and columns with an associated arrangement of selection switches obtained by means of IR- or UV-rays in directions perpendicular to each other and with intersecting points opposite each respective function display field.

As clearly apparent from Figs 4 to 6, the display 15 in the embodiment illustrated in Fig. 1 is provided with a substantially square display screen divided into 4 x 4 fields to display different functions in connection with the Instrument operation. A selection switch arrangement is associated with said function display fields with a selection switch associated with each respective field. An arrangement of touch-free switches is particularly fitted for that purpose and is constituted by the intersecting points between intersecting IR- or UV-rays as schematically shown in dot-and-dash lines 16.

The selectIon switches associated with individual fields may thus activate a function displayed in the actual field, in that the dentist places his finger on the actual intersecting point it the radiation matrix, pointing in tact at the actual field without touching the screen.

It should be observed that the invention particularly aims at the monitoring and control of many different working programs for the instrument operation irrespective of the tact whether, with all instruments in their home position, a number of auxiliary functions are to be effected as well.

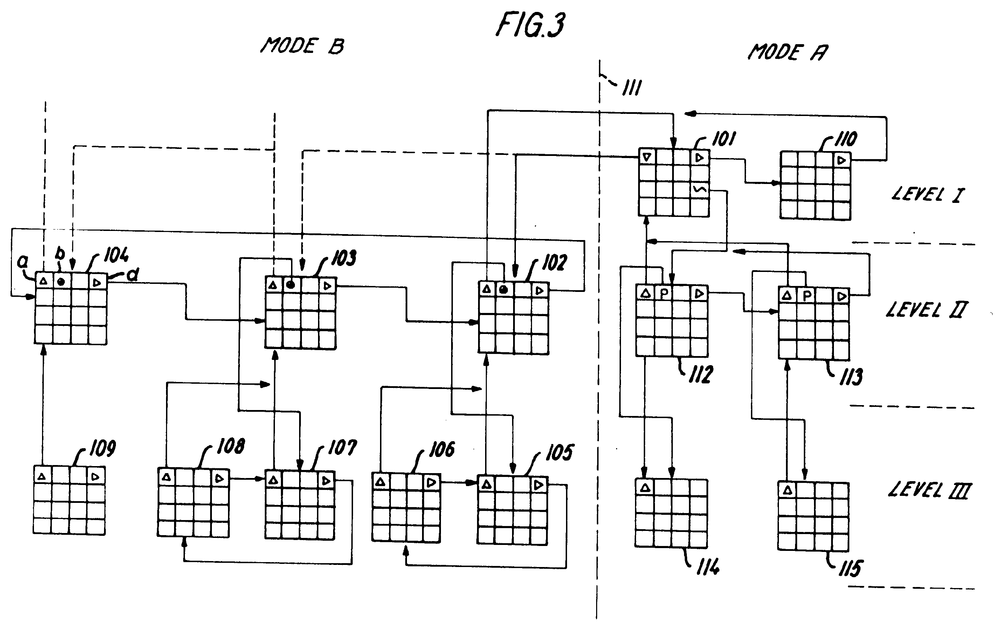

According to the invention an instrument menu forming part of a hierarchically organized system is associated with each set of instrument operation functions. For the embodiment of the dental apparatus illustrated in Fig. 1, a preferred implementation of said hierarchic menu system is illustrated by a diagram in Fig. 3.

The illustrated menu system includes three levels I, II and III, of which the first level I includes a main menu 101 displayed on the display 15 in the mode of operation in which all instruments are in their home position.

Level II of the illustrated diagram includes three parallel instrument menus 102, 103 and 104 associated with one and the same instrument, for instance the instrument 1 with an electric micro-motor. For each of the instruments there is at least one independent instrument menu, but there need not necessarily be several parallel menus, since the necessity thereof depends solely on the number of different working programs or functions to be carried out by the selected instrument.

According to the invention an adjustment menu positioned at the sub-ordinated level III is associated with each instrument menu at level II, as illustrated in the diagram in respect of the menus 105 to 109, of which the parallel adjustment menus 105 and 106 are associated with the instrument menu 102, the adjustment menus 107 and 108 with the instrument menu 103 and the adjustment menu 109 with the instrument menu 104.

In view of the fact that all of the menus illustrated in the diagram may be displayed on the display 15 by activating the selection switch arrangement associated with the display it is an essential aspect for embodiments of the invention using a menu system that a level shift function is shown on the paner 15 in one of its fields when displaying an instrument menu as well as when displaying an instrument menu, thereby providing for switching the display from displaying an instrument menu to showing an adjustment menu and back again by means of the selection switch associated with the actual field.

To the extent various co-ordinated menus are included in one of levels I, II and III of the hierarchically organized menu system a menu shift function for shifting to a parallel menu will further be shown on the dislay 15 in one of its fields when displaying each of the parallel menus.

While examples of the implementation of function displays in the fields on the display 15 for selected menus at each of the levels I, II and III will be described in the following with reference to Figs 4 to 6, the diagram in Fig. 2 illustrates for each menu only functional indications in the fields on the display in which the above mentioned level shift functions and menu shift functions are displayed.

The basis of the hierarchically organized menu system and the above mentioned design of the display with 4 x 4 fields in a matrix of columns and rows is particularly to be found in the recognition that the picture on the display 15 in order to obtain a good operational security ought to be clear, while relevant related functions must be displayed on the panel simultaneously.

In the illustrated matrix design having 4 x 4 fields, the individual function display fields on the panel 15 are designated a, b, c, d, e, f, g, h, i, k, l, m, n, o, p, q, r, a symbol with a downwards directed arrow is displayed in the diagram in field $\underline{a}$ of the main menu 101 to indicate switch-over to an instrument menu at the underlying level II from which switchback to the main menu has been effected. Field $\underline{d}$ of the same menu displays a symbol in the form of a laterally oriented arrow, indicating switch-over to a parallel main menu 110 at level I.

For each of the instrument menus 102 an upwards directed arrow indicating level shift to the overlying level I and a laterally directed arrow indicating shift to a parallel instrument menu at level II, respectively, are displayed in fields $\underline{a}$ and $\underline{d}$, respectively.

Moreover, for the menus 102 to 104 field $\underline{b}$ displays a function for switch-over to an adjustment menu at the underlying level III associated with the actual instrument menu. To indicate this function the illustrated design of the picture makes use of a stylized adjustment screw.

For each of the adjustment menus 105 to 109 the fields $\underline{a}$ and $\underline{d}$ correspondingly show an upwards directed arrow indicating switch-back to the instrument menu at the overlying level II and lateral shift to a parallel adjustment menu at level III.

The mode switch-over not mandatory for the invention is represented in the diagram by a vertically dashed line III separating the menus displayed on display 15 in mode A of the apparatus, in which all instruments are in their home positions, from the menus related to the instrument operation in mode B, in which an instrument is removed for use.

The illustrated implementation of the menu system further includes in mode A sub-ordinated menus at levels II and III. As it will appear from the following, such sub-ordinated menus may be used in the mode wherein all instruments occupy their home position, to activate and control auxiliary functions comprising a large number of adjusting possibilities. Thus, the menus 112 and 113 at level II may for instance be used for regulating the setting of the patient's chair used in connection with the dental apparatus, while the menus 114 and 115 at level III may be used for adjusting operational parameters associated therewith.

In the example of the design of the main menu 101 illustrated in Fig. 4 the display 15 includes besides the function display fields a to r arranged in a 4 x 4 matrix, a comparatively narrow text information field at the top extending throughout the width of the image screen and used to display text information in connection with certain working programs and functions. Each of the function display fields a to r displays graphic symbols for the functions associated with the fields. In view of the tact that the main menu is displayed on the display 15 in mode A, in which all instruments are in their home position, the main menu contains mainly auxiliary functions not associated with the instrument operation proper. As examples of such auxiliary functions the implementation illustrated in Fig. 4 includes the following:

a - Level shift to an instrument menu at the underlying level II; as described in the following this function allows switch-back to a selected instrument menu at level II from which a shiff to the main menu at the overlying level I has been effected with the instrument actually removed for use.

b - Adjustment menu.

c - Questing menu, displaying on the display a relevant auxiliary text or instruction.

d - Switching to a parallel menu at level I.

e - User menu to be used in a multi-user system and allowing any dentist to program individually the operational functions of the instrument.

f - Communication allowing exchange of brief information between the dentist's working place and other rooms in the dental clinic, e.g. receptionist's room, the sterilization room and opening the doors.

g - Stop watch with associated alarm function for use in respect of various treatment operations, e.g. hardening period for composite treatments.

h - Turning-on the X-ray viewer, for instance with automatic turning-off after a certain period of time.

i - Filling water in the rinsing glass.

k - Activating the fountain flush.

l - Turning-on the operation light.

m - Level shift to the particular chair setting mennu 111 which may be used in mode A.

n,o - These last lowest fields on the display may be

p,r - used during the main menu proper to display actually selected working programs for the dental instruments, but by the selection of certain of the above functions, e.g. the multi-user function, the communication function and the stop watch function, these fields may be used to display the available actual selection possibilities; with respect to the multi-user function these fields may thus display identificaiton information of the individual user, thereby allowing the individual user to get acess to the working programs selected by himself just by keying his own code, which may have been set once for all.

By the implementation of the main menu described above by way of example, auxiliary functions not associated with the instrument operation and displayed on the display 15 during the main menu, may be actuated directly by operating the selection switches of the display, thereby making it superfluous in this respect to make use of the foot contact.

As an example of an instrument menu, Fig. 5 illustrates a primary menu for an instrument having an electric micro-motor. In the uppermost row the content of fields b, c and d is unchanged in relation to the main menu, while field a displays the level shift to the main menu at the higher level I. It is then possible, with an instrument removed for use, to switch back to the main menu, for instance in order to carry out an auxiliary function not associated with the operation of the instrument, following which switchback to the same instrument menu may be effected by means of the level shift function in field a below the instrument menu. The two succeeding rows have been combined into a single row with fields e, f, q and h, which in the actual example is used during the instrument menu to display actually adjusted operational parameters and the coupling member that ought to be used in connection with said adjusted parameters. In view of the fact that the instrument menu may include various individual working programs, the content of said fields vary in dependence on the selected working program. By selecting the working program "CLEAN" the fields e to h may for instance be used to display the following functions:

e - the actually ordered speed function, for instance as shown continuous control between a minimum speed and a maximum speed. The instrument menu is in that respect then implementated so that the displayed speed information is the rotational speed of the drill by selecting the coupling member simultaneously displayed in field h.

f,g - The content of water and air in the coolant used during the operation of the instrument, in the illustrated example displayed as a percentage of the maximum possible amount of spray water and spray air.

The four fields i, k, l and m in the lowest row on display 15 are used during the instrument menu to display the four individual working programs to be selectable during the actual menu, in the illustrated example the working program "CLEAN" dislayed in the hatched field. The selection of these programs may be effected either by means of the selection switches of the display or by using the particular control member 8 on the foot contact and by the selection of a specific program this will be displayed in the actual field, e.g. by inverse display of the heading of the program.

As explained above it might be necessary for certain instruments, such as an instrument with an electric micro-motor, due to the restriction of the instrument menu to a limited number of working programs, to work with several parallel instrument menus between which shifting may be effected by use of the shift function in field d.

By use of the adjustment function, in field b during the instrument menu a level shift is effected to the adjustment menu at the underlying level III associated with the actual instrument menu. An example of the implementation of such an adjustment menu is illustrated in Fig. 6.

In comparison with the instrument menu only the display in field b in the uppermost row of fields on display 15 has been changed, the adjustment function having been shifted to a programming function named "P". This makes it possible after an instrustment of the operational parameters to store this function "P" as part of the actual working program for future use.

In the two middle rows of fiels e to m information is displayed concerning the adjustable parameters. In the illustrated example, the fields e and i occuring in the same column display maximum speed and minimum speed, respectively, and the speed control function is displayed therebeneath in field n, actually shown by a graphic symbol as a continuous control.

In the following column the overlying fields f, k display a symbol for spray water and the actually adjusted amount of spray water, respectively, and the fields g, l lying above each other in the next column display a symbol for spray air and the actually adjusted amount of spray air.

The adjustment of the operational parameters is effected by activation the fields o, p in the lowest row, allowing control in the downwards and upwards direction, respectively. The last field r in the lowest row displays the actually selected working program for which an adjustment is effected.

Thus, with this implementation of the adjustment menu firstly the field of the operational parameter, e.g. maximum speed or minimum speed desired to be changed, is operated, following which the shift is effected by controlling one of the fields o or p.

Change of the adjusted speed control function is effected by direct operation of field n, thereby for instance allowing to select cyclically between various types of speed control, e.g. continuous control, a permanent speed or two permanent speeds.

In view of the fact that for a given working program there might be a need, as explained above, for adjusting various operational parameters of a determined working program, a number of parallel adjustment menus at level III may be associated with a certain instrument menu.

Once an adjustment has been made by means of an adjustment menu III, it is possible to shift back to the actual instrument menu by activating the level shift function in field a.

In the illustrated example of implementation it is further possible at any time to effect level shift from a selected instrument menu to the main menu, thereby allowing activation of certain auxiliary functions also when an instrument is removed for use.

## Claims

1. A dental apparatus comprising an instrument arrangement having a number of carriers for dynamic dental instruments (1), energizing units associated therewith, a detector device (3) for providing an instrument selection signal in response to the removal of an instrument from its carrier, an instrument operator device including a foot contact (7) with a movable control member for operating a selected instrument and for the control of auxiliary functions associated with the operation thereof, and a microprocessor (4) for monitoring and controlling the operational functions of the instruments and their auxiliary functions and activating said instrument operator device in response to said instrument selection signal, characterized in that a monitoring and control display (15) is connected with a microprocessor and includes a number of function display fields for visually dispalying operational functions of the instruments and said auxiliary functions, and selection switches associated with the function display fields for the selection of functions displayed in the fields, whereby the total number of selectable functions, is organized in function sets which are to be displayed in the fields and each comprise a number of functions, dependent on the number of display fields means being provided to operate the microprocessor to switch said display from one function set to another.

2. A dental apparatus as claimed in claim 1, characterized in that the function display fields (213 to 216) are positioned in alignment along at least one row and/or column on the display and in that the selection switches (217 to 220) are touch-free switches activated by placing a finger in an activation zone opposite the associated function display field.

3. A dental apparatus as claimed in claim 1 or 2, characterized in that the monitoring and control display (15) includes at least one separate information displaying field (210 to 212) to display information about the functions displayed in the function display fields.

4. A dental apparatus as claimed in claim 3, characterized in that an alfa-numeric keyboard is connected to the microprocessor (4) and that at least one information displaying field (210 to 212) is adapted to display information keyed by means of the keyboard.

5. A dental apparatus as claimed in claim 3 or 4, characterized in that the monitoring and control display (15) is a image screen with associated control devices adapted to display text and video information, said screen including the function display fields in a predetermined area.

6. A dental apparatus as claimed in any of the preceding claims in which a mode switch (10) controlled by the microprocessor (4) in dependence on information from the instrument selector device in a first mode of operation, in which all instruments occupy their home position in the instrument carrier (1), is adapted to communicate with the foot contact (17) for activating auxiliary functions not associated with the instrument operation, characterized in that the microprocessor (4) is adapted to display, in said first mode of operation, auxiliary functions not associated with the instrument operation in the function display fields of the display (15) and on the selection of one of said functions by means of the function selection switch, to switch on the foot contact (7) to actuate an activation device for the actual auxiliary function, whereas in a second mode of operation, in which an instrument is selected for use, the microprocessor is adapted to display operational parameters of said instrument.

7. A dental apparatus as claimed in any of the preceding claims, characterized in that the function display fields and the selection switches selectively communicating with the fields are organized in a matrix arrangement, that instrument operation and programming functions are organized in a hierarchically structured menu system which, for each set of operating functions displayed on the display, comprises an instrument menu (102, 103, 100) located at a first (II) level and which is displayed on the monitoring and control display by selecting the actual instrument, thereby displaying in the function display fields of the display actually adjusted operational parameters of the operation of said instrument and/or of auxiliary functions associated with the instrument, and at least one adjustment menu (105 and 109) associated with the instrument menu and located at a sub-ordinate level (III), and in that on the display of the instrument menu as well as the adjustment menu on the display in one of its fields (a) a level shift function is displayed, for switching over the display to show an adjustment menu and switching back to display the instrument menu, respectively, by operating the selection switch communicating with the field.

8. A dental apparatus as claimed in claim 7, characterized in that a number of co-ordinated instrument menus (102, 103, 104) is provided for at least one instrument, each comprising a specific number of operational functions and/or auxiliary functions, and that on displaying an instrument menu on the display a menu shift function is displayed in one of its fields (d) for shifting to a parallel menu.

9. A dental apparatus as claimed in claim 7 or 8, characterized in that for at least one instrument menu (102, 103, 104) a number of parallel adjustment menus (105 to 109) is provided at the underlying level (III), and in that on the display of each adjustment menu on the display a menu shift function for shifting to a parallel adjustment menu is shown in one of the display fields.

10. A dental apparatus as claimed in claim 7, 8 or 9, characterized in that on the display of each instrument menu (102, 103, 104) identification information for optional selection of a corresponding number of different operation programs is shown in a number of the display fields (i, k, l, m).

11. A dental apparatus as claimed in claims 9 and 10, characterized in that on the display of an adjustment menu associated with an instrument menu identification information about the actually selected program from the instrument menu is shown in one of the display fields (r).

12. A dental apparatus as claimed in any of claims 7 to 11, characterized in that on the display of an associated instrument menu for at least one instrument, information about an actually adjusted velocity function and for motors the coupling member appropriate for the selected function as well as information about the composition of a coolant applied during the use of the instrument is displayed in a number of the fields (e, f, g, h) of the display.

13. A dental apparatus as claimed in any of claims 7 to 11, characterized in that the instrument-carriers are associated with instrument suspension devices (2) for optional connection of various dynamic instruments, that each suspension device includes an instrument sensor member monitored by the microprocessor (4) and adapted to sense the type of the actually connected instrument, and in that one or more energizing source(s) (14) is/are connected to a control circuit (13) controlled by the microprocessor (4), which selects said source(s) for an energy generating function appropriate for the selected instrument or instruments.

14. A dental apparatus as claimed in claim 13, <u>characterized</u> in that on the display of each instrument menu on the display, identification information about the instrument operational parameters is shown in one of the display fields (h).

15. A dental apparatus as claimed in any of the preceding claims 7 to 11 and comprising a switch-over member controlled by the instrument detector unit (3), which with all instruments in their home position in their carriers, switch over the foot contact (7) to control auxiliary functions not associated with the operation of the instrument, <u>characterized</u> in that the hierarchically organized menu system includes a main menu (101) positioned at an overlying level (I), on the displaying of which on the display identification information about a number of auxiliary functions not associated with the operation of the instrument are shown in a number of the display fields (e to m), and in that on displaying each instrument menu on the display a level shift function for shifting to the overlying level is indicated in one of the dislay fields (a), and on displaying the main menu a level shift function for switching back to the actual instrument menu is displayed in one of the display fields (a).

16. A dental apparatus as claimed in claim 15, in which the microprocessor is further programmed for monitoring and controlling various using positions of a patient's chair, <u>characterized</u> in that a number of adjustment functions of the chair is included in an auxiliary function menu (112) displayed at a levet II sub-ordinated in relation to the main menu (101), that on displaying the main menu (102) on the display, identification information about said auxiliary function menu (112) is shown in one of the display fields (m), and that on displaying the auxiliary menu (112) on the display a level shift function for switching back to the main menu is displayed in one of the display fields (a).

17. A dental apparatus as claimed in claim 16, <u>characterized</u> in that an adjustment menu located at a further sub-ordinated level (III) for adjusting chair setting parameters is associated with the auxiliary function menu (112).

## Patentansprüche

1. Zahnärztliche Vorrichtung mit einer Instrumentanordnung, umfassend eine Anzahl Halter für dynamische Zahnarztinstrumente (1), mit den Instrumenten verknüpfte Antriebseinrichtungen, eine Detektorvorrichtung (3) zur Erzeugung eines Instrumentenauswahlsignals hei Entfernen eines Instrumentes von dessen Halter, eine Instrumentbedienungsanordnung mit einem Fusskontakt (7) mit einem beweglichen Steuerorgan zur Betätigung eines ausgewählten Instruments und Steuern von mit der Betätigung in Verbindung stehender Hilfsfunktionen, sowie einen Mikroprozessor (4) zur Überwachung und Steuerung der Betriebsfunktionen der Instrumente und deren Hilfsfunktionen, und Aktivierung der Instrumentbedienungsanordnung auf Anlass des Instrumentenwahlsignals, dadurch <u>gekennzeichnet</u>, dass mit einem Mikroprozessor ein Überwachungs- und Steuerpaneel (15) verbunden ist, das eine Anzahl von Funktions-Displayfeldern zum visuellen Aufzeigen von Bedienungsfunktionen der Instrumente und der Hilfsfunktionen, und mit den Funktions-Displayfeldern in Verbindung stehende Wahlumschalter zur Wahl der in den Feldern aufgezeigten Funktionen umfasst, wobei die Gesamtzahl von wahlfreien Funktionen in Funktionssätzen aufgebaut ist, die in den Displayfeldern aufscheinen, und jeder Satz, abhängig von der Anzahl Displayfelder, eine Reihe von Funktionen beinhaltet, und Mittel zur Betätigung des Mikroprozessors zum Umschaldes Paneels von einem Funktionssatz auf einen anderen vorgesehen sind.

2. Zahnärztliche Vorrichtung nach Anspruch 1, dadurch <u>gekennzeichnet</u>, dass die Funktions-Displavfelder (213-216) entlang zumindest einer Reihe und/oder Säule auf dem Paneel ausgerichtet sind, und dass die Umschalter (217-220) berührungsfreie Umschalter sind, die durch Anbringen eines Fingers in der dem zugehörigen Funktions-Displayfeld gegenüberliegenden Aktivierungszone betätigt werden.

3. Zahnärztliche Vorrichtung nach Anspruch 1 oder 2, dadurch <u>gekennzeichnet</u>, dass das Überwachungs- und Steuerpaneel (15) mindestens ein separates Informations-Displayfeld (210-212) zum Aufzeigen der in den Funktions-Displayfeldern angegebenen Funktionen umfasst.

4. Zahnärztliche Vorrichtung nach Anspruch 3, dadurch <u>gekennzeichnet</u>, dass eine alpha-numerische Tastatur an einen Mikroprozessor (4) angeschlossen ist, und dass zumindest ein Informations-Displayfeld (210-212) dazu vorgesehen ist mittels der Tastatur eingetastete Informationen aufzuzeigen.

5. Zahnärztliche Vorrichtung nach Anspruch 3 oder 4, dadurch <u>gekennzeichnet</u>, dass das Überwachungs- und Steuerpaneel (15) ein Bildschirm mit zugehörigen Steueranordnungen zum Aufzeigen von Text- und Videoinformationen ist, wobei der Schirm in einem vorausbestimmten Bereich die Funktions-Displayfelder aufnimmt.

6. Zahnärztliche Vorrichtung nach einem der vorhergehenden Ansprüche, in welchen ein vom Mikroprozessor (4) gesteuerter Bedienungsumschalter (10), abhängig von der von der Instrumentenwählvorrichtung kommenden Information, in einer ersten Arbeitsweise, in welcher sämtliche Instrumente ihre jeweiligen Stellungen im Instrumenthalter (1) einnehmen, dazu vorgesehen ist zwecks Aktivierung von von der Instrumentbedienung unabhängigen Hilfsfunktionen mit dem Fusskontakt (17) in Verbindung zu treten, dadurch gekennzeichnet, dass der Mikroprozessor (4) in der ersten Arbeitsweise dazu vorgesehen ist, in den Funktions-Displayfeldern des Paneels (15) mit der Instrumentenbedienung nicht in Verbindung stehende Hilfsfunktionen aufzuzeigen, und bei Wahl einer dieser Funktionen mittels des Funktionswahlschalters den Fusskontakt (7) zwecks Betätigung einer Aktivierungsvorrichtung für die betreffende Hilfsfunktion einzuschalten, während in der zweiten Arbeitsweise, in welcher das Instrument zum Gebrauch ausgewählt wird, der Mikroprozessor dazu dient Bedienungsparameter dieses Instruments aufzuzeigen.

7. Zahnärztliche Vorrichtung nach einem der vorhergehenden Ansprüche, dadurch gekennzeichnet, dass die Funktions-Displayfelder und die mit den Feldern selektiv in Verbindung stehenden Wahlschalter in einer Matrixvorrichtung angeordnet sind, dass Instrumenten-Bedienungs- und Programmfunktionen in einem hierarchisch aufgehauten Menüsystem angeordnet sind, das für jeden auf dem Paneel aufscheinenden Satz von Arbeitsfunktionen ein Instrumentmenü (102, 103, 104) umfasst, das sich auf einem ersten (II) Niveau befindet und auf dem Überwachungs- und Steuerdisplay durch Auswählen des betreffenden Instruments aufgezeigt ist, wobei in den Funktions-Displayfeldern des Paneels aktuell eingestellte Bedienungsparameter des Instruments in Betrieb und/oder mit dem Instrument in Verbindung stehender Hilfsfunktionen angezeigt werden, und mindestens ein mit dem Instrumentmenü in Verbindung stehendes und auf einem untergeordneten Niveau (III) befindliches Justiermenü (105 und 109) umfasst, und dass sowohl beim Aufzeigen des Instrumentmenüs als des Justiermenüs in einem der Felder (a) des Paneels eine Niveauwechsel-Funktion zum Umschalten zur Anzeige eines Justiermenüs bzw. Zurückschalten zum Aufzeigen des Instrumentmenüs durch Betätigung des mit den Feldern in Verbindung stehenden Wahlumschalters angezeigt ist.

8. Zahnärztliche Vorrichtung nach Anspruch 7, dadurch gekennzeichnet, dass für mindestens ein Instrument eine Anzahl gleichgestellter Instrumentmenüs (102, 103, 104), von denen jedes eine bestimmte Anzahl Bedienungs- und Hilfsfunktionen umfasst, vorgesehen ist, und dass bei Aufzeigen eines Instrumentmenüs in einem der Felder (d) auf dem Paneel eine Funktion zum Wechseln des Menüs auf ein paralleles Menü angezeigt ist.

9. Zahnärztliche Vorrichtung nach Anspruch 7 oder 8, dadurch gekennzeichnet, dass für mindestens ein Instrumentmenü (102, 103, 104) auf dem darunterliegenden Niveau (III) eine Anzahl von gleichgestellten Justiermenüs (105-109) vorgesehen ist, und dass auf dem Paneel eines jeden Justiermenüs in einem der Displayfelder eine Funktion zum Wechseln des Menüs auf ein paralleles Justiermenü angezeigt ist.

10. Zahnärztliche Vorrichtung nach Anspruch 7, 8 oder 9, dadurch gekennzeichnet, dass auf dem Paneel eines jeden Instrumentmenüs (102, 103, 104) in einer Anzahl von Displayfeldern (i, k, l, m) Identifizierungsinformation zur beliebigen Auswahl einer entsprechenden Anzahl verschiedener Bedienungsprogramme gezeigt ist.

11. Zahnärztliche Vorrichtung nach Anspruch 9 und 10, dadurch gekennzeichnet , dass beim Aufzeigen eines zu einem Instrumentmenü gehörenden Justiermenüs in einem der Felder (r) des Paneels Identifizierungsinformation betreffend das aktuell gewählte Programm des Instrumentmenüs gezeigt ist.

12. Zahnärztliche Vorrichtung nach einem der Ansprüche 7-11, dadurch gekennzeichnet, dass beim Aufzeigen auf dem Paneel eines zugehörigen Instrumentmenüs für mindestens ein Instrument Information über die aktuell eingestellte Geschwindigkeitsfunktion, und für Motoren über das für die eingestellte Funktion passende Kupplungsglied, sowie Information über die Zusammensetzung eines während des Gebrauchs des Instruments verwendeten Kühlmittels in einer Anzahl von Feldern (e, f, g, h) angezeigt ist.

13. Zahnärztliche Vorrichtung nach einem der Ansprüche 7-11, dadurch gekennzeichnet, dass zu den Instrumenthaltern Instrumentaufhängevorrichtungen (2) zum wahlfreien Anschluss von verschiedenen dynamischen Instrumenten gehören, dass jede Aufhängung ein vom Mikroprozessor (4) überwachtes Instrumentsensororgan zum Abtasten der Art des betreffenden angeschlossenen Instruments umfasst, und dass an einen vom Mikroprozessor (4) gesteuerten Steuerkreis (13) eine oder mehrere Energiequellen (14) angeschlossen sind, die vom Mikroprozessor (4) zu einer für das betreffende Instrument oder die betreffenden Instrumente bestimmten Energieabgabefunktion ausgewählt werden.

14. Zahnärztliche Vorrichtung nach Anspruch 13, dadurch gekennzeichnet, dass bei Anzeige eines jeden Instrumentmenüs auf dem Paneel in einem dessen Felder (h) Identifizierungsinformation über das Instrument, für welches auf dem Paneel aufgezeigte Bedienungsparameter vorgesehen sind, angegeben ist.

15. Zahnärztliche Vorrichtung nach einem der vorhergehenden Ansprüche 7-11, und umfassend ein von der Instrument-Detektoreinrichtung (3) gesteuertes Umschalteglied, welches, mit allen Instrumenten am Platze in ihren Haltern, den Fusskontakt (7) zum Steuern von mit der Instrumentbedienung nicht in Verbindung stehenden Hilfsfunktionen umschaltet, dadurch gekennzeichnet, dass das hierarchisch aufgebaute Menüsystem ein in einem übergeordneten Niveau (I) befindliches Hauptmenü (101) umfasst, bei dessen Aufzeigen auf dem Paneel in einer Anzahl der Displayfelder (e-m) Identifizierungsinformationen über eine Anzahl mit der Instrumentenbedienung nicht in Verbindung stehender Hilfsfunktionen aufscheinen, und dass bei Aufzeigen eines jeden Instrumentmenüs auf dem Paneel in einem der Displayfelder (a) eine Funktion des Niveauwechsels auf das übergeordnete Niveau angegeben ist, und bei Anzeigen des Hauptmenüs in einem der Displayfelder (a) eine Funktion des Niveauwechsels auf ein Zurückwechseln zu dem betreffenden Instrumentmenü angezeigt ist.

16. Zahnärztliche Vorrichtung nach Anspruch 15, worin der Mikroprozessor gleichzeitig zur Überwachung und Steuerung von verschiedenen Bedienungsstellen eines Patientenstuhls programmiert ist, dadurch gekennzeichnet, dass eine Anzahl Einstellungsmöglichkeiten des Stuhls in einem im Verhältnis zum Hauptmenü (101) untergeordneten, in einem Niveau II gezeigten Hilfsfunktionsmenü (112) einbezogen sind, und dass bei Aufzeigen des Hauptmenüa (101) auf dem Paneel in einem der Displayfelder (m) Identifizierungsinformation betreffend das Hilfsfunktionsmenü (112) aufscheint, und dass bei Aufzeigen des Hilfsfunktionsmenüs (112) in einem der Felder (a) eine Funktion für einen Niveauwechsel zurück zum Hauptmenü angegeben ist.

17. Zahnärztliche Vorrichtung nach Anspruch 16, dadurch gekennzeichnet, dass ein in einem zusätzlich untergeordneten Niveau (III) befindliches Justiermenü zum Justieren von Stuhleinrichtungsparametern mit dem Hilfsfunktionsmenü (112) in Verbindung steht.

## Revendications

1. Appareil dentaire comprenant un ensemble d'instruments avec un nombre de supports d'instruments dentaires dynamiques (1) avec unités d'actionnement associées, un ensemble détecteur (3) fournissant un signal de choix d'instrument lorsqu'un instrument est prélevé de son support, un dispositif de commande d'instrument comprenant une pédale de contact (7) avec un organe mobile de commande d'un instrument choisi et de commande de fonctions auxiliaires associées à l'emploi de cet instrument, et un microprocesseur (4) de surveillance et de commande des fonctions opératoires des instruments et de leurs fonctions auxiliaires et d'actionnement dudit dispositif de commande d'instrument en réponse audit signal de choix d'instrument, caractérisé en ce qu'un écran de surveillance et de commande (15) est relié à un microprocesseur et comporte un nombre de champs d'affichage de fonction pour affichage visuel de fonctions opératoires des instruments et desdites fonctions auxiliaires, et des commutateurs associés aux champs d'affichage de fonction pour le choix de fonctions affichées dans ces champs, le nombre total de fonctions que l'on peut choisir étant organisé en jeux de fonctions à afficher dans les champs et comportant chacun un nombre de fonctions qui dépend du nombre de champs d'affichage, des moyens étant prévus pour commander le microprocesseur afin de commuter l'écran d'un jeu de fonctions à un autre.

2. Appareil dentaire selon la revendication 1, caractérisé en ce que les champs d'affichage de fonction (213 à 216) sont disposés en alignement sur au moins une ligne et/ou une colonne sur l'écran, et en ce que les commutateurs de choix (217 à 220) sont du type commandé sans contact, en plaçant un doigt dans une zone d'actionnement devant le champ correspondant à l'affichage de fonction.

3. Appareil dentaire selon les revendications 1 ou 2, caractérisé en ce que l'écran de surveillance et de commande (15) comprend au moins un champ séparé (210 à 212) d'affichage d'information concernant les fonctions affichées dans les champs d'affichage de fonction.

4. Appareil dentaire selon la revendication 3, caractérisé en ce qu'un clavier alphanumérique est relié au microprocesseur (4) et en ce qu'au moins un champ d'affichage d'information (210 à 212) est conçu pour afficher de l'information introduite à l'aide du clavier.

5. Appareil dentaire selon les revendications 3 ou 4, caractérisé en ce que l'écran (15) est un écran de présentation d'image, avec dispositifs associés prévus pour présenter un texte et une information vidéo, ledit écran comportant les champs d'affichage de fonction dans une zone prédeterminée.

6. Appareil dentaire selon l'une quelconque des revendications précédentes, dans lequel un commutateur de mode (10), commandé par le microprocesseur (4) en fonction d'une information provenant du dispositif de choix d'instrument, dans un premier mode de fonctionnement où tous les instruments sont à leur place sur leur support (2), est conçu pour communiquer avec la pédale de contact (7) pour enclencher des fonctions auxiliaires non associées à l'emploi de l'instrument, caractérisé en ce que le microprocesseur (4) est conçu pour, dans ledit premier mode de fonctionnement, afficher des fonctions auxiliaires non associées à l'emploi de l'instrument, dans les champs d'affichage de fonction sur l'écran (15), et pour, lors du choix de l'une desdites fonctions à l'aide du commutateur de choix de fonction, enclencher la pédale de contact (7) afin de commander un dispositif de mise en oeuvre de la fonction auxiliaire en question, tandis que dans un second mode de fonctionnement, dans lequel un instrument est prélevé pour emploi, le microprocesseur est congru pour afficher les paramètres opérationnels dudit instrument.

7. Appareil dentaire selon l'une quelconque des revendications précédentes, caractérisé en ce que les champs d'affichage de fonction et les commutateurs de choix communiquant de façon sélective avec les champs sont organisés en disposition matricielle, en ce que les fonctions d'utilisation et de programmation d'instruments sont organisées en un système hiérarchique de menus, système qui, pour chaque jeu de fonctions opératoires affichées sur l'écran, comprend un menu instrument (102, 103, 104) situé sur un premier niveau (II) et affiché sur l'écran de surveillance et de commande lors du choix de l'instrument en question, les champs d'affichage de fonction sur l'écran affichant alors les paramètres fonctionnels actuellement règles d'emploi dudit instrument et/ou les fonctions auxiliaires associées audit instrument, et au moins un menu réglage (105 à 109) associé au menu instrument et situé sur un niveau subordonné (III), et en ce qu'à l'affichage du menu instrument aussi bien que du menu réglage, l'un des champs (a) de l'écran présente une fonction changement de niveau permettant de commuter l'affichage afin de présenter un menu réglage et revenir au menu instrument, respectivement, par commande du commutateur qui communique avec le champ.

8. Appareil dentaire selon la revendication 7, caractérisé en ce que pour au moins un instrument, il est prévu un nombre de menus instrument (102, 103, 104) coordonnés, chacun comportant un nombre spécifique de fonctions opératoires et/ou des fonctions auxiliaires, et en ce que lors de l'affichage d'un menu instrument sur l'écran, une fonction changement de menu est affichée dans un de ses champs (d) pour passage à un menu parallèle.

9. Appareil dentaire selon les revendications 7 ou 8, caractérisé en ce que pour au moins un menu instrument (102, 103, 104), il est prévu un nombre de menus parallèles de réglage (105 à 109) situés au niveau subordonné (III), et en ce que lors de l'affichage de chaque menu réglage sur l'écran, une fonction changement de menu est affichée dans l'un des champs d'affichage, pour passage à un menu parallèle de réglage.

10. Appareil dentaire selon les revendications 7, 8 ou 9, caractérisé en ce que lors de l'affichage de chaque menu instrument (102, 103, 104), une information d'identification pour le choix d'un nombre correspondant de programmes opératoires différents est présenté dans un nombre de champs d'affichage (i, k, l, m).

11. Appareil dentaire selon les revendications 9 et 10, caractérisé en ce que lors de l'affichage d'un menu réglage associé à un menu instrument, une information d'identification du programme actuellement choisi à partir du menu instrument est présentée dans l'un des champs d'affichage (r).

12. Appareil dentaire selon l'une quelconque des revendications 7 à 11, caractérisé en ce que lors de l'affichage d'un menu instrument associé pour au moins un instrument, une information concernant la vitesse actuellement réglée et, pour des moteurs, l'organe d'accouplement approprie à la fonction choisie, ainsi qu'une information sur la composition d'un agent de refroidissement appliqué durant l'emploi de l'instrument, est affichée dans un nombre de champs (e, f, g, h) sur l'écran.

13. Appareil dentaire selon l'une quelconque des revendications 7 à 11, caractérisé en ce que les support d'instrument sont associés à des dispositifs d'accrochage d'instrument (2) pour branchement optionnel de divers instruments dynamiques, en ce que chaque dispositif d'accrochage comprend un détecteur d'instrument surveillé par le microprocesseur (4) et conçu pour détecter le type d'instrument actuellement branche, et en ce qu'une ou plusieurs sources d'énergie (14) sont reliées à un circuit de commande (13) contrôlé par le microprocesseur (4) qui choisit une source de fonction énergétique appropriée pour l'instrument ou les instruments choisis.

14. Appareil dentaire selon la revendication 13, caractérisé en ce que lors de l'affichage de chaque menu instrument sur l'écran, une information d'identification concernant les paramètres opératoires de l'instrument est affichée dans l'un des champs d'affichage (h).

15. Appareil dentaire selon l'une quelconque des revendications 7 à 11, et comprenant un organe commutateur commandé par l'unité de détection d'instrument (3) et qui, lorsque tous les instruments sont à leur place dans leurs supports, commute la pédale de contact (7) pour commander des fonctions auxiliaires non associées à l'emploi de l'instrument, caractérisé en ce que le système hiérarchique de menus comprend un menu principal (101) situé sur un niveau supérieur (I) et à l'affichage duquel une information d'identification concernant un nombre de fonctions auxiliaires non associées à l'emploi de l'instrument est présentée sur l'écran, dans un nombre de champs d'affichage (e à m), et en ce que lors de l'affichage de chaque menu instrument sur l'écran, une fonction changement de niveau pour commuter au niveau supérieur est affichée dans un des champs d'affichage (a) et que lors de l'affichage du menu principal, une fonction changement de niveau pour retour au menu instrument actuel est affichée dans un des champs d'affichage (a).

16. Appareil dentaire selon la revendication 15, et dans lequel le microprocesseur est, de plus, programmé pour surveiller et commander diverses positions d'utilisation du siège du patient, caractérisé en ce qu'un nombre de fonctions de réglage du siège sont incluses dans le menu fonction auxiliaire (112) présenté à un niveau II subordonné au menu principal, en ce que lors de l'affichage du menu principal (102) sur l'écran, une information concernant ledit menu fonction auxiliaire (112) est présenté dans un des champs d'affichage (m), et en ce que lors de l'affichage du menu auxiliaire (112) sur l'écran une fonction changement de niveau est affichée dans l'un des champs d'affichage (a), pour le retour au menu principal.

17. Appareil dentaire selon la revendication 16, caractérisé en ce qu'un menu réglage situé à un autre niveau subordonné (III) pour le réglage des paramètres de réglage de siège est associe au menu fonction auxiliaire (112).

FIG.1

# FIG.2

FIG.3

MODE B

MODE A

LEVEL I

LEVEL II

LEVEL III

EP 0 391 967 B1

*FIG. 4*

*FIG. 5*

*FIG. 6*